# EUROPÄISCHE PATENTANMELDUNG

(11) **EP 3 183 976 A1**
(43) Veröffentlichungstag der Anmeldung: **28.06.2017**
(21) Anmeldenummer: 15202238.0
(22) Anmeldetag: 22.12.2015
(51) Int. Cl.: A23K 10/20, A23K 20/163, A23K 50/40, A23K 50/45, A23K 50/48

(54) **TIERFUTTERPRODUKT UND HERSTELLUNG DESSELBEN**

(71) Anmelder: Herbert Ospelt Anstalt, 9487 Bendern (LI)
(72) Erfinder: Hilck, Mirco, 9487 Bendern (LI); Frick, Sylvester, 9487 Bendern (LI)
(74) Vertreter: Bogensberger, Burkhard

(57) **Zusammenfassung**

Die Erfindung bezieht sich auf ein Tierfutterprodukt für Haustiere, insbesondere für Hunde oder Katzen, bestehend aus einem Futtermittel (5) aus der Kategorie Halbfeucht- oder Nassfutter und einer wasserdichten, autoklavierbaren Schlauchbeutelverpackung (1,1'), wobei das Futtermittel (5) eine Brätmasse aus tierischen und/oder pflanzlichen Rohstoffen sowie gegebenenfalls Gelier- und/oder Verdickungsmitteln und gegebenenfalls weiteren Zusätzen umfasst und einen Wassergehalt von mindestens 14 Gew.% und maximal 90 Gew.% aufweist, im gebrauchsfertigen Zustand bei Raumtemperatur nicht fliessfähig ist, eine halbfeste schnitt- und stichfeste Konsistenz besitzt sowie eine mechanische Festigkeit aufweist, die es gestattet, das Futtermittel wenigstens 1 cm, gegebenenfalls wenigstens 2 - 5 cm weit als integren Strang in horizontaler Richtung aus der Schlauchbeutelverpackung (1,1') heraus zu befördern, ohne dass der Strang abbricht.

Die Erfindung bezieht sich ausserdem auf ein Verfahren zur Herstellung eines solchen Tierfutterprodukts und dessen Verwendung zur interaktiven, werkzeuglosen und hilfsmittelfreien Verfütterung an Haustiere.

## Beschreibung

### TECHNISCHES GEBIET

Die vorliegende Erfindung bezieht sich auf ein Tierfutterprodukt, welches in erster Linie als Hunde- oder Katzen-Nahrung in Schlauchbeuteln angeboten wird.

### STAND DER TECHNIK

Im Stand der Technik sind unzählige Tiernahrungsmittel für Haustiere bekannt, welche als Allein- oder Ergänzungsfutter in verschiedenen Formen und Verpackungen in den Handel kommen.

Tierfutterprodukte für Katzen und/oder Hunde umfassen Trockenfutter, Halbfeuchtfutter und Nassfutter-Varianten. Letztere werden überwiegend als Stückchen in Brät, Stückchen in Sauce oder Stückchen in Gelee in verschlossenen Dosen, Schalen oder Standbeuteln im Handel angeboten.

Als weitere, kleine Futtereinheiten, die man einem Hund oder einer Katze als Belohnung oder als Zwischenmahlzeit anbieten kann, sind im Stand der Technik auch fliessfähige Tiernahrungsmittel mit einer ketchupartigen Konsistenz aber auch niedrig-viskose, flüssige Tiernahrungsmittel bekannt, die beispielsweise in Schlauchbeuteln aus wasserbeständiger Folie, meist aus Aluminiumverbundfolie oder Kunststoffverbundfolie mit und ohne Sperrschichten abgefüllt sind.

Ein derartiges Tierfutterprodukt mit flüssigem Inhalt, das als Katzen- oder Hunde-Snack verwendet werden kann, ist aus WO 2010/133376 bekannt.

### KURZE BESCHREIBUNG DER ERFINDUNG

Die Handhabung von fliessfähigen, insbesondere niedrig-viskosen, Tiernahrungsmitteln, vor allem wenn sie in - meist länglichen - Schlauchbeuteln zum Aufreissen abgepackt sind, kann zu ungewolltem Verschütten und dadurch zum Verschmutzen von Kleidern, Möbeln oder sonstigen Wohnungseinrichtungen wie z.B. Teppichen, Boden, Bodenbelägen, und dergleichen führen. Ausserdem setzt die Verfütterung solcher fliessfähiger Tiernahrungsmittel im Regelfall die Verwendung einer Unterlage, insbesondere einer Futterschale, eines Tellers, eines Löffels oder eines ähnlichen Hilfsmittels voraus.

Dem gegenüber ist es die Aufgabe der vorliegenden Erfindung, ein Tierfutterprodukt bereit zu stellen, welches ein Futtermittel in Form eines Halbfeucht- oder Nassfutters umfasst, das zwar ebenfalls in einem länglichen Schlauchbeutel abgepackt ist, das aber eine weiche und gleichzeitig stabile und kompakte Konsistenz aufweist. Mit "stabil und kompakt" ist gemeint, dass das Futtermittel, wenn es aus dem Schlauchbeutel in horizontaler Richtung heraus befördert wird, beispielsweise vom geschlossenen Ende ausgehend durch das gegenüberliegende, offene Ende hinaus geschoben oder gedrückt wird, eine Strecke von wenigstens 1 cm überwinden kann, ohne abzubrechen. Typischerweise ist das Futtermittel so stabil, dass man es mit den Fingern ergreifen und hochheben kann, ohne dass man es dabei zerquetscht und ohne dass es in Einzelstücke zerbricht.

Damit kann das Futtermittel dem Haustier unmittelbar und auf interaktive Weise persönlich, in der gewünschten Geschwindigkeit und in der gewünschten Menge direkt aus der Verpackung heraus dargeboten werden, was das Fütterungserlebnis wesentlich steigert und der Tierliebe vieler Hunde- und Katzenbesitzer sehr entgegen kommt.

### FIGURENBESCHREIBUNG

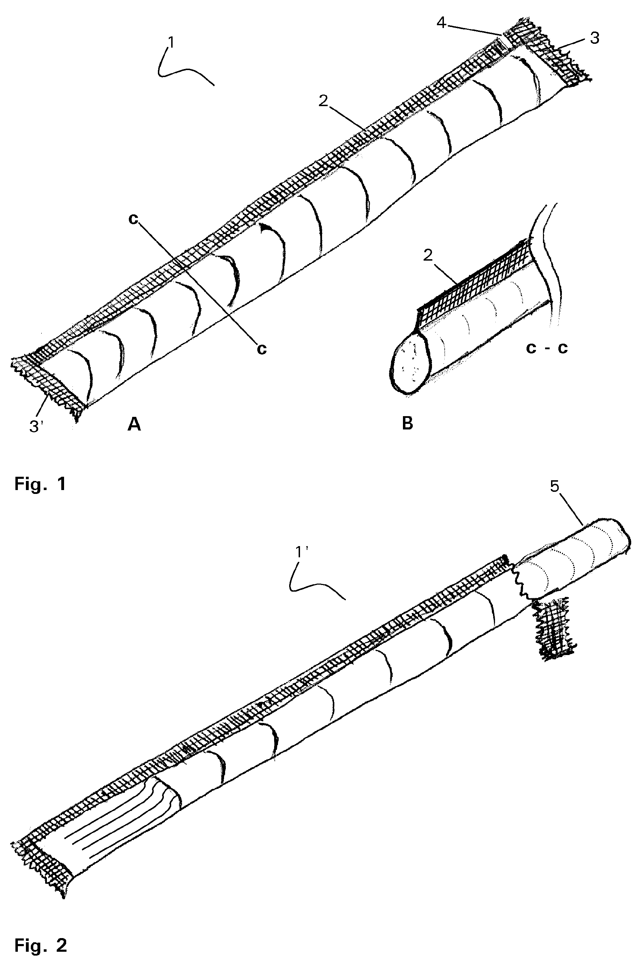

- Fig. 1: zeigt ein erfindungsgemässes Tierfutterprodukt in Form eines in einem Schlauchbeutel abgepackten Futtermittels in Schrägansicht von oben (A) und in einer Querschnittsansicht (B) entlang einer Schnittlinie c-c.
- Fig. 2: zeigt das Tierfutterprodukt von Fig. 1, wobei der Inhalt des an einem Ende aufgerissenen Schlauchbeutels ein Stück weit aus dem Schlauchbeutel herausragt.
- Fig. 3: zeigt ein Vergleichsprodukt aus dem Stand der Technik, mit nichtrandständig angeordneter Siegelnaht in Längsrichtung und spezieller Gestaltung des Aufreissbereiches an einem Ende, als Schrägansicht von oben (A) und als Querschnittsansicht (B) entlang einer Schnittlinie d-d.

### DETAILLIERTE BESCHREIBUNG DER ERFINDUNG

Die vorliegende Erfindung bezieht sich also auf ein Tierfutterprodukt bestehend aus einer wasserdichten, autoklavierbaren Schlauchbeutel-Verpackung 1,1', mit einem darin enthaltenen Futtermittel 5 aus einer der Kategorien Halbfeucht- und Nassfutter.

In einer ersten Ausführungsform bezieht sich die Erfindung auf ein solches Tierfutterprodukt, das sowohl als Alleinfutter als auch als Ergänzungsfutter und insbesondere auch als Zwischendurch-Mahlzeit oder als spezielle Belohnung für Hunde und Katzen vorgesehen ist. Es setzt sich im Wesentlichen zusammen aus der erwähnten Schlauchbeutelverpackung und einem darin enthaltenen Futtermittel in Form einer Brätmasse, die mindestens eine Komponente aus der Gruppe Fleisch, tierische Nebenerzeugnisse, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide enthält und ausserdem mindestens einen Zusatz aus der Gruppe Mineralstoffe, Geliermittel, Verdickungsmittel, geschmacksgebende oder geschmacksverstärkende Substanzen, Farbstoffe, Konservierungsmittel, Antioxidantien, Vitamine. Das Futtermittel erfüllt im gebrauchsfertigen Zustand folgende Kriterien:
das Futtermittel ist bei Raumtemperatur
   - nicht fliessfähig,
   - ist zwar weich, besitzt aber eine schnitt- und stichfeste, feinbrätartige Konsistenz und eine längliche, stab- oder stäbchenförmige Gestalt, und
   - weist eine mechanische Festigkeit auf, die es gestattet, das Futtermittel wenigstens 1 cm, gegebenenfalls wenigstens 2 - 5 cm, weit als zusammenhängenden, integren Strang in horizontaler Richtung aus einem an einem Ende über seine gesamte Breite geöffneten Schlauchbeutel heraus zu befördern, beispielsweise vom geschlossenen Ende des Schlauchbeutels ausgehend durch das gegenüberliegende, offene Ende hinaus zu schieben oder hinaus zu drücken, ohne dass der Strang abbricht.

Für manche Anwendungszwecke kann das Futtermittel eine Konsistenz haben, die es erlaubt, das Futtermittel auch unabhängig von der Art seiner Verpackung mit den Fingern zu ergreifen und beispielsweise aus einer beliebigen geöffneten Verpackung zu entnehmen, ohne dass es dabei in Einzelteile zerbricht oder zerquetscht wird. Gleichzeitig ist es aber bei weitem nicht so hart und fest wie Trockenfutter.

Erreicht wird dies dadurch, dass beispielsweise tierische und/oder pflanzliche Rohstoffe der oben genannten Art vorgelegt, falls erforderlich ausserdem noch zerkleinert, gegebenenfalls püriert, eventuell mit gewünschten Zusatzstoffen versetzt und zu einer Brätmasse vermischt werden und dann wenigstens einer der nachfolgenden Verfahrensschritte angewandt wird:
a) die Brätmasse wird auf einen Wassergehalt eingestellt, der im Endprodukt die gewünschte feinbrätähnliche oder feinbrätartige Konsistenz ermöglicht oder ursächlich bewirkt oder zumindest wesentlich dazu beiträgt; und/oder
b) die Brätmasse wird mit wenigstens einem Verdickungs- und/oder Geliermittel versetzt, welches die im fertigen Endprodukt gewünschte Konsistenz ermöglicht oder ursächlich bewirkt oder zumindest wesentlich dazu beiträgt; und/oder
c) die Brätmasse wird mittels besonderer verfahrenstechnischer Massnahmen, insbesondere mittels Hitzebehandlung, so bearbeitet, dass sie im Endprodukt die gewünschte Konsistenz aufweist.

In einer Ausführungsform weist das fertige Brät einen Wassergehalt von mindestens 14 Gew.% und maximal 90 Gew.% auf. Grundsätzlich könnte das Brät zwar auch in andere Verpackungen abgefüllt werden, doch kommt der Vorteil dieser Art von Futtermittel am besten in Schlauchbeutelverpackungen zur Wirkung, weil man zur Anwendung weder Werkzeuge wie z.B. eine Schere, noch Hilfsmittel wie z.B. Löffel, Teller und dergleichen benötigt. Und auch die Finger bleiben sauber, wenn die Schlauchbeutelverpackung mit mindestens einer Aufreisskerbe, typischerweise in Schlitz- oder Dreiecksform, versehen ist.

Das Futtermittel kann - falls erforderlich - rund 0.5 - 20 Gew.%, bezogen auf die Trockenmasse, an Gelier- und/oder Verdickungsmitteln enthalten. Geeignete Gelier- und/oder Verdickungsmittel sind im Stand der Technik bekannt, wie zum Beispiel Gelatine und quellfähige Polysaccharide, letztere insbesondere aus der Gruppe der Pektine, Alginate, Carrageene, Stärken, modifizierten Stärken, Johannisbrotkernmehl, Guarkernmehl, Gummi arabicum, Traganth, Konjak, Xanthan, Cassia, und Agar-Agar.

Typische Packungsgrössen des gegenständlichen Tierfutterproduktes umfassen pro Verzehreinheit etwa 2g bis 100g an Futtermittel, je nachdem, ob es für Katzen oder Hunde vorgesehen ist.

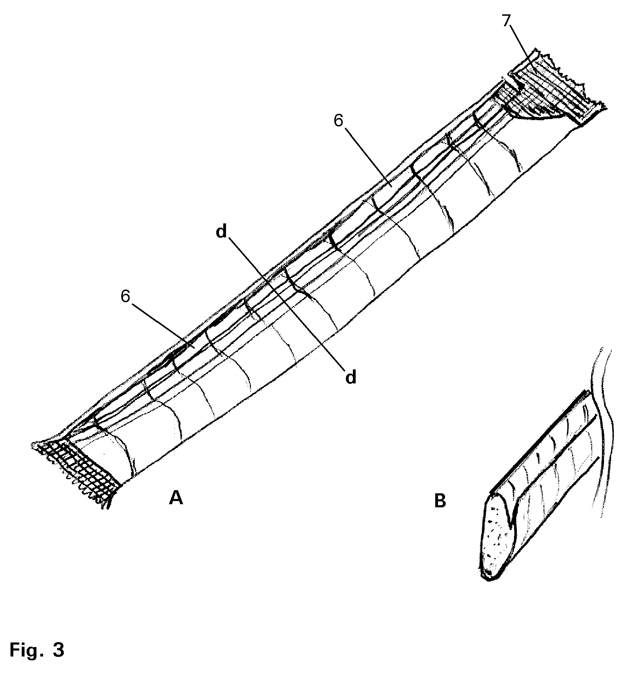

In einer Ausführungsform der Erfindung wird dem Umstand Rechnung getragen, dass zur Entnahme des Inhalts aus einem Schlauchbeutel 1 dieser über seine gesamte Breite geöffnet werden sollte. Anders als bei den im Stand der Technik bekannten Tierfutterprodukten mit fliessfähigen, insbesondere dünnflüssigen, Inhalten, bei denen die Schlauchbeutel nur einen Teil ihres Querschnitts als Öffnung freigeben sollen, ist für die gegenständlichen Tierfutterprodukte die Aufreissbarkeit des Schlauchbeutels über seine gesamte Breite bzw. über seinen gesamten Querschnitt von Vorteil und erwünscht. Dies erlaubt es - im Gegensatz zu solchen bekannten Tierfutterprodukten mit fliessfähigem Inhalt - die Schlauchfolie kostengünstig in Längsrichtung randständig zu versiegeln, ohne einen zusätzlichen Schritt eines Umklappens und zumindest endständigen Fixierens der längsseitigen Siegelnaht, wie in Abb. 3 schematisch dargestellt, vornehmen zu müssen. Auch ist es nicht erforderlich, den Aufreissbereich technisch so zu gestalten, dass zwar ein gezieltes Einreissen ermöglicht aber ein vollständiges Durchreissen möglichst verhindert wird.

Im Stand der Technik bekannte Schlauchbeutel-basierte Tierfutterprodukte mit flüssigem Inhalt weisen, wie in Fig. 3 anhand eines Vergleichsbeispiels dargestellt, häufig eine mittig oder leicht aussermittig angeordnete Schweiss- oder Siegelnaht 6 in Längsrichtung auf, welche zumindest in den beiden stirnseitigen Endbereichen umgeklappt und mit den quergesiegelten Nähten form- oder stoffschlüssig verbunden ist. Zudem sind solche Produkte mit einem speziell gestalteten Aufreiss-Ende 7 ausgestattet, das eine vordefinierte Öffnung erzeugen soll, die kleiner ist als der Querschnitt des Schlauchbeutels und die ein zielgerichtetes Entleeren des Schlauchbeutels erleichtert. Gleichzeitig wird damit verhindert, dass der flüssige Inhalt ungewollt auf einmal freigesetzt und dabei womöglich teilweise verschüttet wird.

Bei den erfindungsgemäss eingesetzten Schlauchbeuteln aus längsseitig gesiegeltem Folienmaterial, z.B. Aluminiumverbundfolie, können sowohl die in Längsrichtung verlaufende Schweiss- oder Siegelnaht 2, als auch die an den stirnseitigen Enden jeweils vorhandenen Schweiss- oder Siegelnähte 3, 3' dieselbe Breite und gegebenenfalls, wo vorhanden, auch dieselbe Prägung aufweisen.

Beispielsweise können die Schweiss- oder Siegelnähte 2,3,3' für die meisten Ausführungsformen der Erfindung eine Breite von ca. 2 - 10mm, insbesondere von ca. 3 - 6mm aufweisen, je nachdem, ob es sich um grössere Verzehreinheiten für Hunde oder kleinere für Katzen handelt. Dies lässt noch ausreichend Platz für das Einschneiden mindestens einer Kerbe 4 zum Zwecke der Erleichterung des vollständigen Aufreissens des Schlauchbeutels quer zu seiner Längsrichtung. Je nach Packungsgrösse überschreitet die Breite der Siegelnaht 2,3,3' zumindest im Bereich der Kerbe 4 die Länge der Kerbe um typischerweise mindestens 2 - 5mm.

Während erfindungsgemässe Verpackungsgrössen pro Verzehreinheit eine Länge von typischerweise ca. 10 - 25 cm aufweisen, können für kleinere Häppchen auch Schlauchbeutel von lediglich 5-10cm Länge zum Einsatz kommen. Dies erleichtert das Dosieren des Futters vor allem für kleinere Hunde und Katzen und hilft zu vermeiden, dass nicht vollständig aufgefressenes Futter mitsamt der angebrochenen Verpackung weggeworfen wird. Bei kleineren Verzehreinheiten ist die Wahrscheinlichkeit grösser, dass der gesamte Inhalt einer Verpackung vom Haustier verzehrt wird. Des weiteren kann vor allem bei Schlauchbeuteln dieser Grösse die Aufreisskerbe 4 auch stirnseitig, d.h. im Bereich wenigstens einer der beiden quergesiegelten Nähte 3,3', angeordnet sein, so dass der Schlauchbeutel in Längsrichtung aufgerissen wird.

Unter den Begriffen "Verschweissen" oder "Versiegeln" soll hierin grundsätzlich auch "Verkleben" mit umfasst sein, soweit solches für die Anwendung im Bereich der Tiernahrungsmittel-Herstellung in Betracht kommt und zulässig ist. Analog schliesst der Ausdruck "Siegelnaht" auch den Begriff "Klebenaht" mit ein.

Geeignete Schlauchbeutel sind üblicherweise aus einem futtermitteltauglichen Folienmaterial, insbesondere aus Aluminiumverbundfolie, Kunststoffverbundfolie mit und ohne Sperrschichten, oder aus imprägniertem oder beschichtetem Papier gefertigt. Entscheidend ist ausserdem, dass sie die im Zuge der Endproduktherstellung erforderliche Hitzebehandlung im Autoklaven schadlos und ohne Abgabe unerwünschter Emissionen überstehen.

In einer weiteren Ausführungsform bezieht sich die Erfindung auf ein Verfahren zur Herstellung des erfindungsgemässen Tierfutterproduktes und umfasst die folgenden Schritte:
a) es wird eine Mischung aus tierischen und/oder pflanzlichen Rohstoffen sowie gegebenenfalls einem oder mehreren Gelier- und/oder Verdickungsmitteln vorbereitet, falls erforderlich zerkleinert, gegebenenfalls püriert, und optional mit allfälligen weiteren Zusatzstoffen versetzt und zu einer pumpfähigen Brätmasse vermischt, wobei
b) ein Wassergehalt von 14 - 90 Gew.%, bezogen auf die fertige Endmischung des Bräts, eingestellt wird; in einem nachfolgenden Schritt
c) wird das Brät in eine geeignete Verpackung, beispielsweise in einen Schlauchbeutel 1 abgefüllt;
d) danach wird die Verpackung rundum geschlossen, im Fall eines Schlauchbeutels wird der befüllte Schlauchbeutel 1 also an seinem offenen Ende durch Verkleben, Versiegeln oder Verschweissen geschlossen, und anschliessend
e) zum Zwecke der Hygienisierung und Haltbarmachung einer Hitzebehandlung, typischerweise einer Heissdampfbehandlung in einem Autoklaven, unterzogen, worauf
f) das solcherart hitzebehandelte, verpackte Brät aktiv oder passiv auf Raumtemperatur abgekühlt wird.

In der industriellen Fertigung erfolgt das Erzeugen und Befüllen eines so genannten Dreirandsiegel-Schlauchbeutels üblicherweise ab Rolle, d.h. ausgehend von einer planen Endlosfolie, die maschinell um einen im wesentlichen zylindrischen Befüllstutzen geschlagen und kontinuierlich an den längsseitigen Enden verschweisst oder versiegelt wird. Der solcherart kontinuierlich entstehende, längsgesiegelte Schlauch wird während seines Weitertransports stossweise jeweils mit einer vorbestimmten, einer Verzehreinheit entsprechenden Menge an Brät befüllt und durch Quersiegelung in die einzelnen Portionen bzw. Schlauchbeuteleinheiten unterteilt. Gleichzeitig erfolgt das Einschneiden der Aufreisskerben 4 an der längsseitigen 2 und/oder querseitigen 3,3' Siegelnaht und das Abtrennen der einzelnen Schlauchbeuteleinheiten aus dem Endlosschlauch-Verbund im Bereich der quergesiegelten Trennflächen.

Anstelle des Einschneidens wenigstens einer Aufreisskerbe pro Schlauchbeuteleinheit kann die längs oder quer verlaufende Siegelnaht als spezielle Siegelnaht mit einem Saum aus Wellen- oder Sägezahnmuster ausgeführt werden, was das Einreissen ebenfalls erleichtert.

Anstelle eines Dreirandsiegel-Schlauchbeutels kann auch ein autoklavierbares Stickpack-System zum Einsatz gelangen, welches in Längsrichtung überhaupt keine Naht aufweist. In diesem Fall kann anstelle von Aufreisskerben oder spezieller Siegelnaht mit Wellen- oder Sägezahnmuster an jedem der beiden Enden eine gewöhnliche, quer zur Längsrichtung verlaufende Siegelnaht mit wenigstens einer integrierten Sollbruchlinie vorgesehen sein.

Die befüllten Schlauchbeuteleinheiten werden darauf hin einer Hitzebehandlung zugeführt. Die Hitzebehandlung kann beispielsweise durch heissen Wasserdampf bei einer Temperatur von ca. 70 - 130°C über eine Zeitdauer von 5 bis 25 min erfolgen und wird üblicherweise in einem Autoklaven bei einem Druck von ca. 1 - 2 bar durchgeführt. Dabei werden nicht nur unerwünschte mikrobielle Keime abgetötet sondern die Rohstoffe durch chemische Reaktionen untereinander mindestens teilweise in eine leichter bekömmliche Form umgewandelt.

Durch das anschliessende aktive Abkühlen oder das passive Abkühlenlassen auf Raumtemperatur, d.h. auf eine Temperatur von ca. 20 - 25°C, verfestigt sich das ursprünglich fliess- oder zumindest pumpfähige Brät zu dem erfindungsgemäss weichen, aber dennoch stich- und/oder schnittfesten Futtermittel halbfester Konsistenz.

Wenn bei der Herstellung des Bräts ein oder mehrere Gelier- und/oder Verdickungsmittel zugesetzt werden, werden sie gesamthaft in einer Menge, bezogen auf die Trockenmasse des Bräts, von ca. 0.5 - 20 Gew.% zugesetzt. Dabei ist unter anderem zu beachten, dass das wenigstens eine Gelierund/oder Verdickungsmittel durch die Hitzebehandlung seine Quellfähigkeit nicht oder nicht wesentlich einbüsst.

Die nachfolgenden praktischen Beispiele dienen einem besseren Verständnis der Erfindung und sind keinesfalls einschränkend zu verstehen.

### BEISPIEL 1: Futtermittel auf der Basis von tierischem Gewebe

1000g eines oder mehrerer tierischer Rohstoffe aus der Gruppe der tierischen Gewebe von Geflügel, Schwein, Rind, Wild, Lamm, Fisch, Weich- oder Krustentiere, werden vermischt und z.B. mittels eines Cutters oder eines Fleischwolfs zerkleinert. Dann wird Carrageen in einer Menge von 25g zugemischt.

Der breiigen Mischung wird ausserdem Guarkernmehl in einer Menge von 5g zugesetzt und innig vermengt, so dass sich ein Gesamtwassergehalt von ca. 75 Gew.% ergibt. Das so erzeugte, im wesentlichen stückfreie Brät wird anschliessend an einer Abfüllmaschine in einen kontinuierlich entstehenden Endlos-Schlauch aus in Längsrichtung randständig gesiegelter Aluminiumverbundfolie abgefüllt, wobei durch Heisssiegelung quer zur Längsrichtung der Schlauch in etwa 15 cm lange, etwa fingerdicke Schlauchbeuteleinheiten ä ca. 10g Inhalt unterteilt wird. Unmittelbar darauf werden die Schlauchbeuteleinheiten im Bereich oder in der Nähe des Bereiches der durch die Quersiegelung entstandenen Trennflächen mit mindestens einer Sollbruchlinie oder mindestens einer kurzen Aufreisskerbe innerhalb der längs oder quer verlaufenden Siegelnaht versehen und im Bereich der quergesiegelten Trennflächen vom Endlosschlauch abgetrennt.

Die derart versiegelten, vom Endlosschlauch abgeschnittenen Schlauchbeuteleinheiten werden schliesslich im Autoklaven bei 115°C über einen Zeitraum von 18 min und einem Druck von 1.6 bar erhitzt. Für manche Brätzusammensetzungen oder Anwendungszwecke kann es hingegen nützlich sein, die Hitzebehandlung schonender bei niedrigeren Temperaturen, beispielsweise bei einer Temperatur zwischen 70 und 100°C in mehreren Intervallen oder durchgehend in einem Intervall von wenigstens 25 min durchzuführen.

Nach der Hitzebehandlung kühlen die befüllten Schlauchbeuteleinheiten auf Raumtemperatur ab, wobei sich das Brät im Inneren jedes Schlauchbeutels auf die gewünschte Konsistenz verfestigt, wodurch ein gebrauchsfertiges Tierfutterprodukt für Hunde oder Katzen im Einklang mit der vorliegenden Erfindung entsteht.

### BEISPIEL 2: Futtermittel auf der Basis von tierischen und/oder pflanzlichen Trockenmehlen

Die Herstellung und Verarbeitung der Brätmasse erfolgt wie in Beispiel 1, nur dass statt tierischem Gewebe 1000g einer Mischung aus 85 Gew.% Tiermehlen und 15 Gew.% Maisstärke eingesetzt wird. Die Mischung wird mit 25g Gelatine und 15g Johannisbrotkernmehl ergänzt und mit Wasser bis zur Pumpfähigkeit versetzt. Der Gesamtwassergehalt der rohen Brätmasse wird dadurch auf ca. 40-60 Gew.% eingestellt.

Die weitere Verarbeitung erfolgt wie in Beispiel 1. Die so hergestellten Futtermittel-Proben zeigen im angegeben Bereich des Gesamtwassergehalts keine erfindungsrelevanten Konsistenzunterschiede und liegen allesamt im Bereich der erfindungsgemässen Anforderungen.

## Patentansprüche

1. Tierfutterprodukt für Haustiere, insbesondere für Hunde oder Katzen, bestehend aus einem Futtermittel (5) aus der Kategorie Halbfeucht- oder Nassfutter und einer wasserdichten, autoklavierbaren Schlauchbeutelverpackung (1,1'), **dadurch gekennzeichnet, dass** das Futtermittel (5) eine Brätmasse aus tierischen und/oder pflanzlichen Rohstoffen sowie gegebenenfalls mindestens einem Gelier- und/oder Verdickungsmittel und gegebenenfalls weiteren Zusätzen umfasst, wobei das Futtermittel (5) einen Wassergehalt von mindestens 14 Gew.% und maximal 90 Gew.% aufweist und im gebrauchsfertigen Zustand bei Raumtemperatur
- nicht fliessfähig ist,
- eine halbfeste schnitt- und/oder stichfeste Konsistenz besitzt,
- eine mechanische Festigkeit aufweist, die es gestattet, das Futtermittel wenigstens 1 cm, gegebenenfalls wenigstens 2 - 5 cm weit als integren Strang in horizontaler Richtung aus der Schlauchbeutelverpackung (1,1') heraus zu befördern, ohne dass der Strang abbricht, und/oder
- eine mechanische Festigkeit aufweist, die es gestattet, das Futtermittel mit den Fingern zu ergreifen und anzuheben, ohne dass es dabei zerquetscht wird oder in Einzelteile zerfällt.

2. Tierfutterprodukt nach Anspruch 1, **dadurch gekennzeichnet, dass** die Brätmasse mindestens eine Komponente aus der Gruppe Fleisch, tierische Nebenerzeugnisse, Tiermehle, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide, Pflanzenmehle enthält.

3. Tierfutterprodukt nach Anspruch 1 oder 2, **dadurch gekennzeichnet, dass** die Brätmasse mindestens einen Zusatz aus der Gruppe der Mineralstoffe, geschmacksgebenden oder geschmacksverstärkenden Substanzen, Farbstoffe, Konservierungsmittel, Antioxidantien, und Vitamine enthält.

4. Tierfutterprodukt nach einem der Ansprüche 1 bis 3, **dadurch gekennzeichnet, dass** das Futtermittel wenigstens ein Gelier- und/oder Verdickungsmittel in einer Menge von 0.5 - 20 Gew.%, bezogen auf die Trockenmasse, enthält.

5. Tierfutterprodukt nach Anspruch 4, **dadurch gekennzeichnet, dass** das Gelier- und/oder Verdickungsmittel aus der Gruppe Gelatine, Pektine, Alginate, Carrageene, Stärken, modifizierte Stärken, Johannisbrotkernmehl, Guarkernmehl, Gummi arabicum, Traganth, Konjak, Xanthan, Cassia, und Agar-Agar ausgewählt ist.

6. Tierfutterprodukt nach einem der Ansprüche 1 bis 5, **dadurch gekennzeichnet, dass** die Schlauchbeutelverpackung (1) entweder als Dreirandsiegel-Schlauchbeutel ausgeführt ist und der Schlauchbeutel an jedem seiner beiden Enden eine quer zur Längsrichtung verlaufende Siegelnaht (3,3') sowie entlang seiner Längsseite eine randständige Siegelnaht (2) aufweist, oder als Stickpack-Schlauchbeutel ohne längsseitige Siegelnaht, mit lediglich quer verlaufenden Siegelnähten an den Enden.

7. Tierfutterprodukt nach einem der Ansprüche 1 bis 5, **dadurch gekennzeichnet, dass** die Schlauchbeutelverpackung (1) entweder im Bereich eines ihrer beiden Enden mindestens eine in Längsrichtung oder quer zur Längsrichtung verlaufende Aufreisskerbe (4) oder Sollbruchlinie aufweist oder wenigstens eine der längsseitig oder quer angeordneten Siegelnähte mit einem das Aufreissen erleichternden Wellen- oder Sägezahn-Saum versehen ist.

8. Tierfutterprodukt nach einem der Ansprüche 1 bis 7, **dadurch gekennzeichnet, dass** die Schlauchbeutelverpackung (1) aus einem futtermitteltauglichen, bis wenigstens 150°C hitzebeständigen Folienmaterial, insbesondere aus Aluminiumverbundfolie, Kunststoffverbundfolie, oder aus imprägniertem oder beschichtetem Papier, gefertigt ist.

9. Verfahren zur Herstellung eines Tierfutterproduktes nach Anspruch 1, **dadurch gekennzeichnet, dass**
a) eine Mischung aus tierischen und/oder pflanzlichen Rohstoffen, gegebenenfalls unter Hinzufügung von 0.5 - 20 Gew.%, bezogen auf die Trockenmasse, wenigstens eines Gelier- und/oder Verdickungsmittels vorbereitet sowie gegebenenfalls mit weiteren Zusätzen versetzt, bei Bedarf zerkleinert, gegebenenfalls püriert, und zu einem pumpfähigen Brät gemischt wird; wobei
b) ein Wassergehalt von 14 - 90 Gew.%, bezogen auf die fertige Endmischung des Bräts, eingestellt wird; worauf
c) das Brät in eine wasserdichte, bis wenigstens 150°C hitzebeständige Schlauchbeutelverpackung abgefüllt und die befüllte Schlauchbeutelverpackung durch Versiegeln quer zu ihrer Längsrichtung verschlossen wird; worauf
e) die befüllte Schlauchbeutelverpackung zum Zwecke der Hygienisierung und Haltbarmachung einer Hitzebehandlung unterzogen und danach aktiv oder passiv auf Raumtemperatur abgekühlt wird;
wobei sich das Brät durch das Abkühlen zu einem halbfesten, stich- und schnittfesten Futtermittel feinbrätartiger Konsistenz der Kategorie Halbfeucht- oder Nassfutter verfestigt.

10. Verfahren nach Anspruch 9, **dadurch gekennzeichnet, dass** die Brätmasse mindestens eine Komponente aus der Gruppe Fleisch, tierische Nebenerzeugnisse, Tiermehle, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide, und Pflanzenmehle enthält.

11. Verfahren nach einem der Ansprüche 9 bis 10, **dadurch gekennzeichnet, dass** das Brät mindestens einen Zusatz aus der Gruppe der Geliermittel, Verdickungsmittel, Mineralstoffe, geschmacksgebenden oder geschmacksverstärkenden Substanzen, Farbstoffe, Konservierungsmittel, Antioxidantien und Vitamine enthält.

12. Verfahren nach einem der Ansprüche 9 bis 11, **dadurch gekennzeichnet, dass** die Hitzebehandlung durch Heissdampf bei einer Temperatur im Bereich von 70 - 130°C kontinuierlich oder in Intervallen über eine Zeitdauer von 5 - 25 min und einem Druck von 1 - 2 bar erfolgt.

13. Verfahren nach einem der Ansprüche 9 bis 12, **dadurch gekennzeichnet, dass** in Schritt c) an einer Befüllmaschine eine plane Endlosfolie in Längsrichtung über einen zylindrischen Befüllstutzen geführt, zu einem Schlauch geformt und entlang ihrer Längsseite mit einer randständig angeordneten Schweiss- oder Siegelnaht zu einem Endlosschlauch versiegelt wird, wobei der so entstehende Endlosschlauch an seinem führenden Ende durch Quersiegelung verschlossen und darauf hin über den Befüllstutzen mit einer vorbestimmten Menge an Brät befüllt und anschliessend an seinem offenen Ende durch Quersiegelung vollständig verschlossen wird, wobei der befüllte Endlosschlauch im Bereich der Längs- oder Quersiegelung mit wenigstens einer Aufreisskerbe oder Sollbruchlinie versehen und anschliessend im Bereich der Quersiegelung durchtrennt wird, wodurch ein befüllter Schlauchbeutel entsteht, der der Hitzebehandlung gemäss Schritt d) zugeführt werden kann.

14. Verfahren nach Anspruch 13, **dadurch gekennzeichnet, dass** der befüllte Endlosschlauch in Schritt c) anstatt mit wenigstens einer Aufreisskerbe oder Sollbruchlinie mit einem das Aufreissen erleichternden Wellen- oder Sägezahnsaum im Bereich wenigstens einer der längs oder quer angeordneten Siegelnähte ausgestattet wird.

15. Verwendung des Tierfutterprodukts nach einem der Ansprüche 1 bis 8 zur interaktiven, werkzeuglosen und hilfsmittelfreien Verfütterung an Haustiere wie z.B. Hunde oder Katzen.
